# EUROPEAN PATENT SPECIFICATION

(11) **EP 3 955 772 B1**
(45) Date of publication and mention of the grant of the patent: **07.06.2023**
(21) Application number: 20716156.3
(22) Date of filing: 14.04.2020
(51) Int. Cl.: A47B 47/04, F16B 12/24, F16B 12/26

(54) **A DEVICE FOR SUPPORTING A REMOVABLE PANEL WITH RESPECT TO A WALL OF AN ARTICLE OF FURNITURE AND A METHOD FOR MOUNTING AND DEMOUNTING A REMOVABLE PANEL TRANSVERSALLY TO A WALL OF AN ARTICLE OF FURNITURE**
VORRICHTUNG ZUM STÜTZEN EINER ABNEHMBAREN PLATTE IN BEZUG AUF EINE MÖBELWAND UND VERFAHREN ZUR MONTAGE UND DEMONTAGE EINER ABNEHMBAREN PLATTE QUER ZU EINER MÖBELWAND
DISPOSITIF DE SUPPORT D'UN PANNEAU AMOVIBLE PAR RAPPORT À UNE PAROI D'UN ÉLÉMENT DE MOBILIER ET PROCÉDÉ DE MONTAGE ET DE DÉMONTAGE D'UN PANNEAU AMOVIBLE TRANSVERSALEMENT À UNE PAROI D'UN ÉLÉMENT DE MOBILIER

(30) Priority: 16.04.2019 IT 201900005830
(43) Date of publication of application: 23.02.2022
(73) Proprietor: CAR S.r.l., 35127 Padova (IT)
(72) Inventor: ROVOLETTO, Stefano, 35127 PADOVA (IT)
(74) Representative: Anselmi, Davide
(86) International application number: PCT/IB2020/053496
(87) International publication number: WO 2020/212838

(56) References cited:
- EP-A1- 1 228 721
- US-A1- 2018 066 690

## Description

### TECHNICAL FIELD

The present invention relates to a device for supporting a removable panel with respect to a wall of an article of furniture, in particular in the sector it is also defined as a shelf support device with respect to the wall of the article of furniture in which said shelf is inserted.

In detail, the invention refers to a concealed support device interposed between the panel and a wall of the article of furniture that enables the panel to be mounted and/or demounted from the wall without ruining the components themselves. In addition, the invention relates to an article of furniture on which the aforesaid device is installed.

In addition, the invention relates to a method for mounting and demounting a removable panel transversally to a wall of an article of furniture.

### PRIOR ART

Currently, the use is known of different types of devices, also known with the name shelf support device, configured to support a shelf of an article of furniture between the lateral walls of the same.

A first type of device can be inserted cantilevered into a special cavity fashioned on the walls of the article of furniture to act as a support bracket for a shelf. Optionally, the shelf can have housings shaped to accommodate the cantilevered portion of the device so as to make it invisible upon completion of assembly.

Alternatively, a second type of device commonly referred to as "concealed" comprises a hollow body inserted into a special hole fashioned on the side of the shelf, and a pin slidably inserted inside the hollow body and movable between two stable configurations: a first configuration in which it is fully inserted in the hollow body and a second configuration in which it is partially projecting from the hollow body. A number of holes is obtained on the walls of the article of furniture which is equal to the number of devices inserted on the shelf, so as to constrain the shelf between the walls by aligning the holes of one with the respective holes of the other. Once the holes are aligned, using springs, the pins are able to independently pass from the first configuration to the second configuration so as to insert into the hole fashioned on the wall, defining the support for the shelf.

However, the main problem of this solution becomes apparent during the step of removing the shelf from the wall of the article of furniture. Generally, in fact, the pin is brought back to the first configuration thanks to the application of strong pressure directly on the shelf (generally from the bottom upwards) able to overcome the expansion force of the spring, but which at the same time ruins the wall of the article of furniture, and in particular the edges of the hole in which the pin is inserted, as the latter is always at least partially projecting (in an intermediate position between the first and the second configuration) and therefore able to ruin the article of furniture due to the prolonged friction.

To overcome this problem, in some support devices the pins are moved from the first to the second configuration using a screwdriver, fingers or other means such as for example described in EP 1 228 721.

However, this type of device presents some aesthetic problems and practical difficulties during the mounting and demounting step of the shelf. First of all, these devices do not appear to be fully integrated into the structure of the article of furniture (when mounted), being at least partially visible from the outside. In fact, the movement by means of a screwdriver or finger requires that at least a portion of the device is visible and remains accessible from the outside, ruining the overall aesthetics of the article of furniture.

In addition, for each device applied to the article of furniture (generally there are four for each shelf) an operator must manually move the pins between the first and the second configuration, or vice versa, to define the hooking or unhooking of the shelf with respect to the walls of the article of furniture. In addition, during the mounting step, before moving the pins, the operator must be able to align the holes of the shelf and wall without being able to observe them directly.

### SUMMARY

In this context, the technical task of the present invention is to propose a device for supporting a removable panel with respect to a wall of an article of furniture which overcomes the drawbacks of the known art as mentioned above.

In particular, an object of the present invention is to provide a device for supporting a removable panel that is easy to use during mounting and demounting the article of furniture.

In detail, an object of the present invention is to provide a device for supporting a removable panel conformed so as to be easily movable between a condition in which the shelf is supported with respect to the walls, and a condition in which the shelf is movable with respect to the walls of the article of furniture.

Another object of the present invention is to provide a device for supporting a removable panel that is invisible to an operator once the shelf is installed between the walls of the article of furniture.

A further object of the present invention is to provide a device for supporting a removable panel that does not damage the article of furniture both during the mounting step and during the demounting step.

Another object of the present invention is to provide an article of furniture in which between two panels, preferably a shelf and at least one wall, said device for supporting a removable panel can be interposed.

Lastly, an object of the present invention is to provide a method for mounting and demounting a removable panel transversally to a wall of an article of furniture.

The stated technical task and specified objects are substantially achieved by a device for supporting a removable panel with respect to a wall of an article of furniture, by an article of furniture equipped with the device and by a method for mounting and demounting a removable panel transversally to a wall of an article of furniture, which comprise the technical features disclosed in the independent claims. The dependent claims correspond to further advantageous aspects of the invention.

It should be highlighted that this summary introduces, in simplified form, a selection of concepts which will be further elaborated in the detailed description given below.

The invention relates to a device for supporting a removable panel with respect to a wall of an article of furniture, in which the removable panel and the wall are arranged transversally with respect to one another. In particular, the device comprises a hollow body having a lateral wall extending along a longitudinal direction between a bottom and a main opening thereof, a movable element extending along the longitudinal direction and slidably arranged inside the hollow body at least between a first operating position and a second operating position. In detail, in the first operating position a terminal portion of the movable element projects from the hollow body through the main opening, while in the second operating position the terminal portion is at least partly inserted in the hollow body. The device further comprises a main elastic element interposed between the bottom and the movable element and is configured to move the movable element towards the first operating position, and at least one return elastic element interposed between the lateral wall of the hollow body and the movable element and active thereon to cause the movable element to return from the first operating position towards the second operating position. The return elastic element is configurable between an inactive condition, corresponding to the first operating position, in which it does not exert an elastic force on the movable element in the direction of the second operating position, and an active condition, corresponding to the second operating position, in which it exerts an elastic force on the movable element to return it to the second operating position following a triggering movement of the movable element towards the inside of the hollow body.

An article of furniture comprises at least one removable panel having a first cavity formed longitudinally to the extension of the removable panel itself, at least one wall arranged transversally with respect to the removable panel and having a second cavity fashioned transversally to the surface extension of the same wall, and at least one previously described device interposed between the wall and the removable panel. In particular, the first cavity is configured to fully contain the hollow body of the device and the second cavity is configured to receive the terminal portion of the movable element when the latter is in the first operating position so that the removable panel is supported by the resting of the terminal portion inside the second cavity.

A method for mounting and demounting a removable panel transversally to a wall of an article of furniture, comprises the operating steps of:
- fashioning at least one first cavity on the removable panel longitudinally to the surface extension of the removable panel itself;
- fashioning at least one second cavity on the wall of the article of furniture transversally to the surface extension of the wall itself;
- connecting a previously described device to the removable panel, so that the hollow body of the device is entirely inserted in the first cavity of the removable panel and the terminal portion of the movable element in the first operating position is projecting with respect to the removable panel;
- arranging the removable panel transversally to the wall of the article of furniture so that the first cavity and the second cavity are aligned to one another and the terminal portion of the movable element is inserted in the second cavity in order to support the removable panel.

### BRIEF DESCRIPTION OF THE DRAWINGS

Additional features and advantages of the present invention will become more apparent from the indicative and thus non-limiting description of a preferred but not exclusive embodiment of a device for supporting a removable panel with respect to a wall of an article of furniture, as illustrated in the appended drawings, in which:
- figure 1 illustrates, according to a schematic side view, a section of the device for supporting a removable panel of the invention, in which said movable element is in the first operating position;
- figure 2 illustrates, according to a schematic side view, a section of the device for supporting a removable panel of the invention, in which said movable element is in the second operating position;
- figure 3a illustrates, according to a perspective view, the movable element of the device for supporting a removable panel of the invention;
- figure 3b illustrates, according to a perspective view different from that shown in figure 3a, the movable element of the device for supporting a removable panel of the invention;
- figure 4 illustrates, according to a perspective view from above, the device for supporting a removable panel of the invention;
- figure 5 illustrates, according to a frontal perspective view, a first embodiment of an aspect of the device for supporting a removable panel of the invention;
- figure 6 illustrates, according to a frontal perspective view, a second embodiment of an aspect of the device for supporting a removable panel of the invention;
- figure 7 illustrates, according to a frontal schematic view, an article of furniture in which at least one device for supporting a removable panel is installed.

With reference to the drawings, they serve solely to illustrate embodiments of the invention with the aim of better clarifying, in combination with the description, the inventive principles on which the invention is based.

### DETAILED DESCRIPTION

The present invention relates to a device for supporting a removable panel with respect to a wall of an article of furniture.

With reference to the figures, the device has been generically indicated with the number 1.

The other numerical references refer to technical features of the invention which, barring indications otherwise or evident structural incompatibilities, the person skilled in the art will know how to apply to all the variant embodiments described.

Any modifications or variants which, in the light of the description, are evident to the person skilled in the art, must be considered to fall within the scope of protection established by the present invention, according to considerations of technical equivalence.

In the present detailed description which is explanatory of the invention and therefore not limiting, reference will be made mainly to the interposition of the device between a panel (for example a shelf) and a lateral wall of an article of furniture. However, the device described herein is conformed so as to be interposed between any two panels of an article of furniture to arrange transversally to one another.

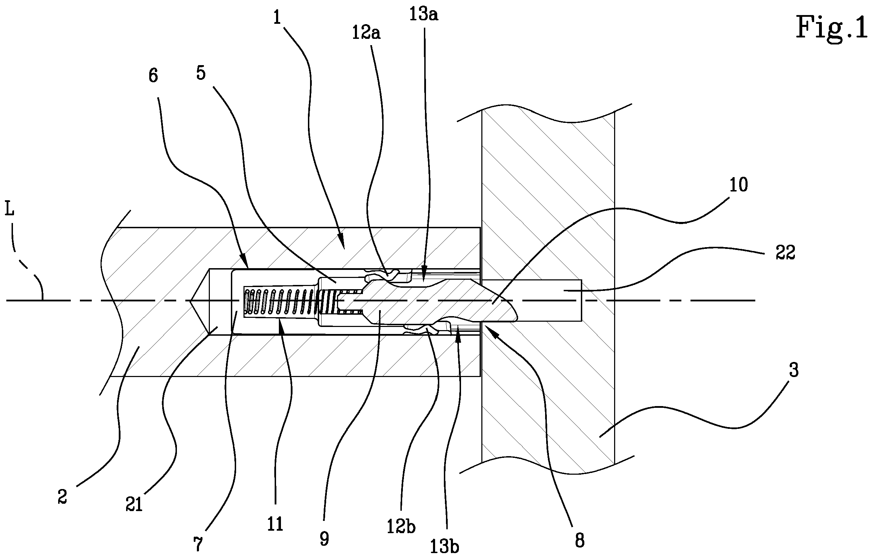

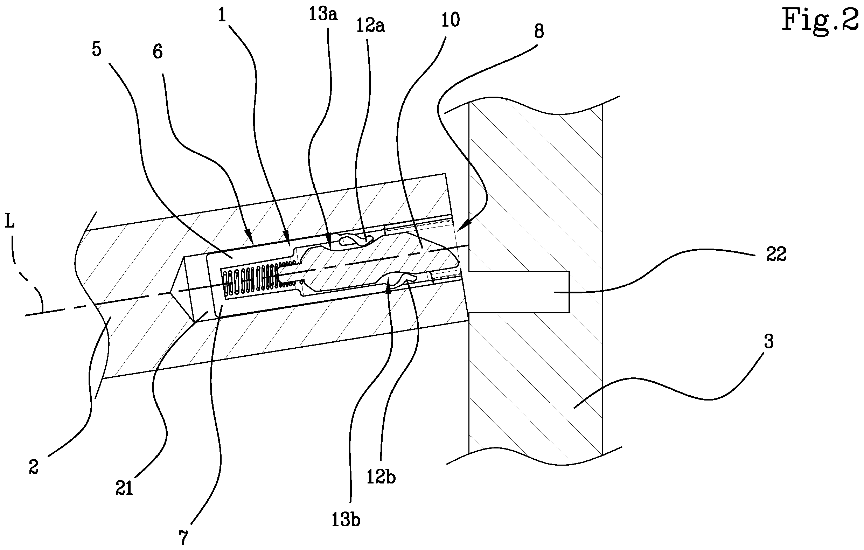

Figure 1 and figure 2 illustrate a device 1 for supporting a removable panel 2 with respect to a wall 3 of an article of furniture 4, in which the removable panel and the wall 3 are arranged transversally with respect to one another. In particular, the device 1 comprises a hollow body 5, which has a lateral wall 6 extending along a longitudinal direction L between a bottom 7 thereof and a main opening 8, a movable element 9 extending along the longitudinal direction L and it is slidably arranged inside the hollow body 5 at least between a first operating position and a second operating position. In the first operating position a terminal portion 10 of the movable element 9 projects from the hollow body 5 through the main opening 8, while in the second operating position the terminal portion 10 is at least partly inserted in the hollow body 5.

In addition, the device 1 comprises a main elastic element 11 interposed between the bottom 7 and the movable element 9 and configured to move the movable element 9 towards the first operating position. Advantageously, the device 1 further comprises at least one return elastic element 12 interposed between the lateral wall 6 of the hollow body 5 and the movable element 9 and active on the latter to return it from the first operating position towards the second operating position. The return elastic element 12 is configurable between an inactive condition (figure 1) and an active condition (figure 2). In the inactive condition, in which it abuts when the movable element 9 is in the first operating position, the return elastic element 12 does not exert an elastic force on the movable element 9 in the direction of the second operating position. In the active condition, however, in which it abuts when the movable element 9 is in the second operating position, the return elastic element 12 exerts an elastic force on the movable element 9, opposite to the elastic force exerted by said main elastic element 11 on the same movable element 9 along the longitudinal direction L, in order to cause the movable element to return to the second operating position following a triggering movement of the movable element 9 itself towards the inside of the hollow body 5. According to an embodiment of the invention visible in figures 1, 2, 4, the return elastic element 12 comprises a flexible appendage arranged in a cantilever fashion inside the hollow body 5 so as to interact with the movable element 9 during the movement from the first operating position to the second operating position, and vice versa. More precisely, the appendage has an undulated conformation, substantially in the form of an "S", so that a curved portion defines a portion active on the movable element 9 during its movement, and so as to be elastically flexible between the active and inactive conditions.

In other words, the device 1 is a "shelf support" device of the concealed type, as it can be completely interposed between a shelf and a wall of an article of furniture to be completely invisible to an external observer. Advantageously, the device 1 comprises a main elastic element 11, such as a spring configured to work in expansion, configured to keep the movable element 9 projecting from the hollow body 5 in the first operating position, so as to define the support of the removable panel 2 when it is installed perpendicular to the wall 3 of the article of furniture 4.

Even more advantageously, the device 1 comprises at least one return elastic element 12, which is configured to assist the movement of the movable element 9 towards the second operating position in which it is inserted in the hollow body 5 to allow the movement of the removable panel 2 with respect to the wall 3 of the article of furniture 4. As better explained below, during a demounting step of the article of furniture 4, a force applied by an external operator is such as to define a triggering movement of the movable element 9 towards the inside of the hollow body 5, which is subsequently (and substantially simultaneously) assisted by the active action of the return elastic element 12 useful in overcoming the expansion force produced by the spring.

In other words, said return elastic element 12 accelerates the movement of the movable element 9 towards the second operating position to remove the removable panel 2.

According to one aspect of the invention visible in figure 1 and figure 2, the dimensional relation between an internal section of the hollow body 5 and the movable element 9 is such as to enable the movable element 9 to tilt inside the hollow body 5 so as to define the aforementioned triggering movement. In other words, when the movable element 9 is configured in the first operating position, the application of an external force along a transversal direction T to the longitudinal direction L, so as to tilt the movable element 9 itself with respect to the longitudinal direction L. Substantially, therefore, the triggering movement is at least partly defined by a relative movement between the removable panel 2 and the wall 3.

In other words, each transversal section of the terminal portion 10 has a lower surface extension with respect to an internal section of the hollow body 5 to define a free space useful for the triggering movement. More specifically, each transversal section is defined along the extension of the terminal portion 10 itself with respect to a plane that is orthogonal to the longitudinal direction L.

In other words, the movable element 9 is tilting in said hollow body 5 with respect to the longitudinal direction L according to a tilting movement parallel to the wall 3 in which said wall 3 is, preferably, vertical. In practice, the movable element 9 tilts so as to sufficiently incline to facilitate the sliding and retraction of the movable element 9 according to the triggering movement.

Preferably, the movable element 9 is configured to move towards the second operating position as a consequence of the combined action of the elastic return element 12 and the tilting movement of the movable element 9 inside the hollow body 5.

According to one aspect of the invention, the return elastic element 12 is connected to the lateral wall 6 of the hollow body 5 and is configured to cooperate with a respective depression 13 fashioned on a lateral surface 14 of the movable element 9 in order to move the latter towards the second operating position following the triggering movement. In other words, the movable element 9 in the first operating position maintains the return elastic element 12 in the inactive condition, substantially in a tension condition against the lateral surface 14. Following the triggering movement, when the movable element 9 slides towards the second operating position, the return elastic element 12 bends towards the depression 13 present on the lateral surface 14 and also, consequently, in relative movement with respect to the hollow body 5 and therefore to the same return elastic element 12. In this way, the return elastic element 12 maintains the pressure induced on the lateral surface 14 substantially constant to abut in a resting condition. Consequently, it imparts a thrust force capable of assisting the movement of the movable element 9 towards the second operating position and thereby overcoming the expansion force of the main elastic element 11.

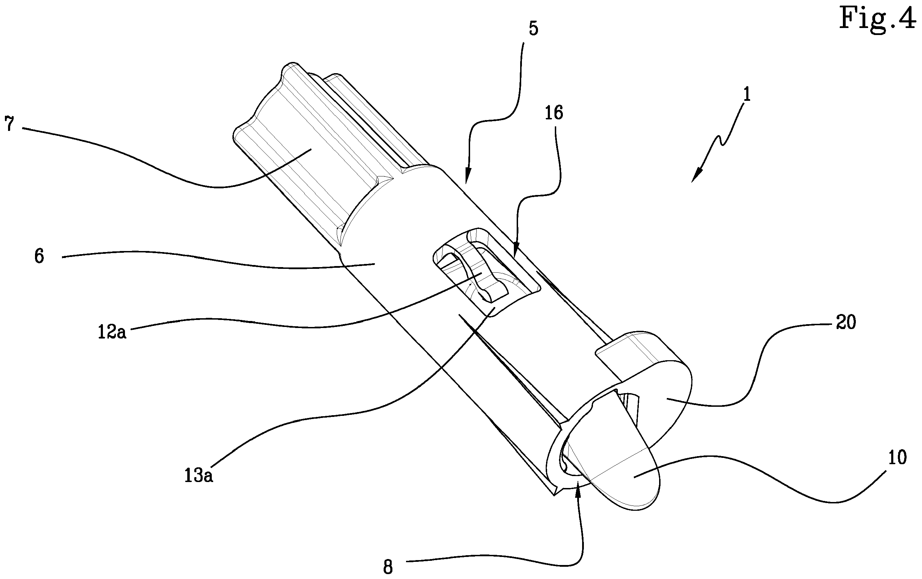

According to one aspect of the invention illustrated in figure 4, the lateral wall 6 of the hollow body 5 comprises an opening window 16 to facilitate the movement of the return elastic element 12 between the active and inactive conditions.

According to a preferred aspect of the invention, the device 1 comprises at least two return elastic elements 12 substantially opposite to the longitudinal direction L.

According to another aspect of the invention, the movable element 9 has on the lateral surface 14 thereof two depressions 13 that are substantially opposite with respect to the longitudinal direction L.

According to a further aspect of the invention, the depressions 13 are mutually arranged staggered along the longitudinal direction L so that one of the two is arranged at a shorter distance from the terminal portion 10 than the other. Similarly, the return elastic elements 12 are also mutually arranged staggered along the longitudinal direction L. Preferably, the return elastic elements 12 are spaced differently from the respective depressions 13 so as to act sequentially on one another following the triggering movement in order to overcome the expansion force of the main elastic element 11 and simplify the movement of the movable element 9 from the first operating position to the second operating position. In other words, following the triggering movement and therefore the translation of the movable element 9 from the first to the second operating position, the upper return elastic element 12a is the first of the two return elastic elements 12 to act on the respective upper depression 13a, being configured from the inactive condition to the active condition to aid the movement of the movable element 9 towards the second operating position. The lower return elastic element 12b acts later on the respective lower depression 13b to further assist the movement of the movable element 9 towards the second operating position (the lower return elastic element 12b is in fact more spaced from the respective lower depression 13b with respect to the distance between the upper return elastic element 12a and the upper depression 13a).

According to a further aspect of the present invention, the lower depression 13b has a greater (deeper) concavity and a shorter length with respect to the concavity and length of the upper depression 13a. According to one aspect of the invention visible in figures 1 and 2, the terminal portion 10 of the movable element 9 has a tapered longitudinal section (obtainable through a vertical plane parallel to the longitudinal direction L).

According to another aspect of the invention, the terminal portion 10 has a lower surface 17 that extends parallel to the longitudinal direction L and an upper surface 18 that is at least partly inclined with respect to the longitudinal direction L. In this way, the lower surface 16 defines a support surface when the movable element 9 is in the first operating position and the removable panel 2 is connected to the wall 3 of the article of furniture 4. Furthermore, given the conformation of the terminal portion 10, the triggering movement acts from the lower surface 17 towards the upper surface 18 to induce the inclination of the movable element 9 itself inside the hollow body 5 and consequently allow the movement from the first to the second operating position.

According to a further aspect of the invention, the terminal portion 10 has two consecutive inclinations, in which the respective angles are distinct and progressively greater with respect to the longitudinal direction L according to a direction which goes from the bottom 7 to the main opening 8. In other words, the upper surface of the terminal portion 10 has a first part extending from the lateral surface 14 of the movable element 9, having a first inclination, and a second part consecutive to the first, having a second inclination greater than the first.

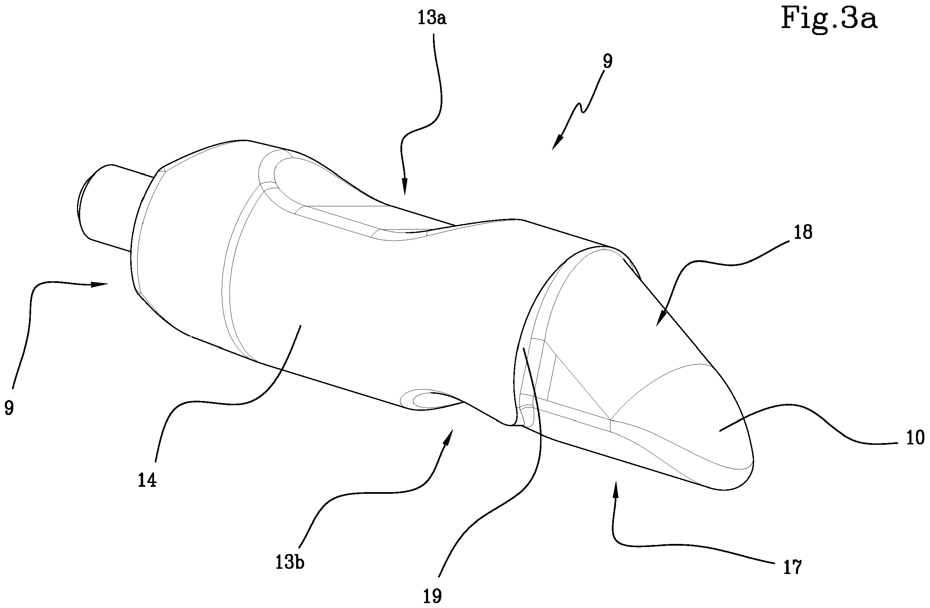

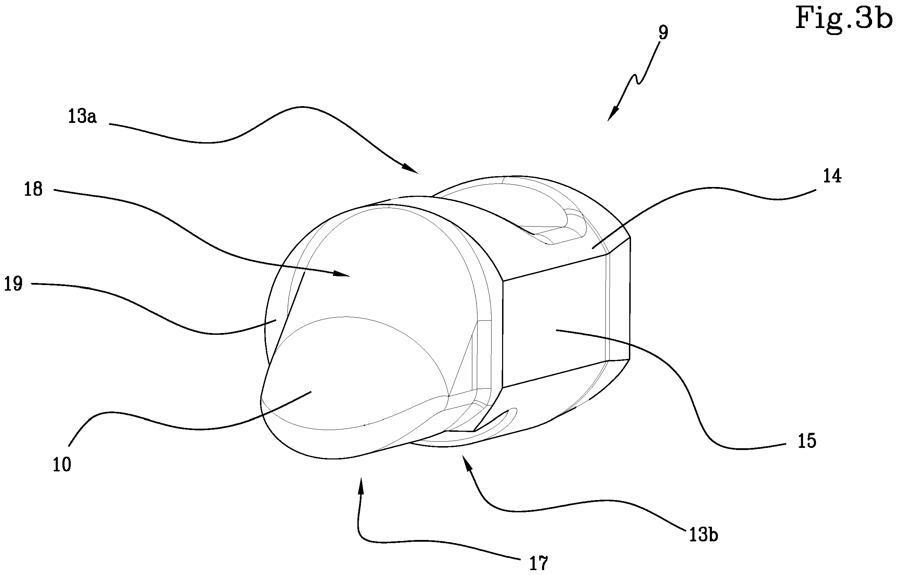

Figures 3a and 3b illustrate, in greater detail and according to two distinct perspective views, the movable element 9.

According to one aspect of the invention, each transversal section of the terminal portion, defined according to a plane that is orthogonal to the longitudinal direction L, has a rounded conformation. In other words, the terminal portion 10 of the movable element 9 has a sharp and tapered shape, preferably according to the indications given in the previous paragraph. More precisely, the lower surface 17 extends parallel to the longitudinal direction L with the concavity facing upwards, while the upper surface 18 extends in an inclined direction with respect to the longitudinal direction L with the concavity facing downwards. The upper surface 18 also has a greater curvature with respect to the lower surface 17. According to a further aspect of the invention, the movable element 9 has a limit stop element 19 interposed between the terminal portion 10 and the lateral surface 14 of the same movable element 9. The limit stop element 19 is configured to abut a specific obstacle of the hollow body 5 so as to stop the movement of the movable element 9 from the second operating position to the first operating position.

Preferably, the limit stop element 19 is a step fashioned between the terminal portion 10 and the lateral surface 14 of the movable element 9. In detail, at least the transversal section of the terminal portion 10 closest to the lateral wall 14 has a smaller extension than the transversal section of the lateral wall, so that projecting portions of the lateral surface 14 are present that can abut against a predefined obstacle arranged at the main opening 8 of the hollow body 5 so as to prevent the movable element 9 from exiting the latter.

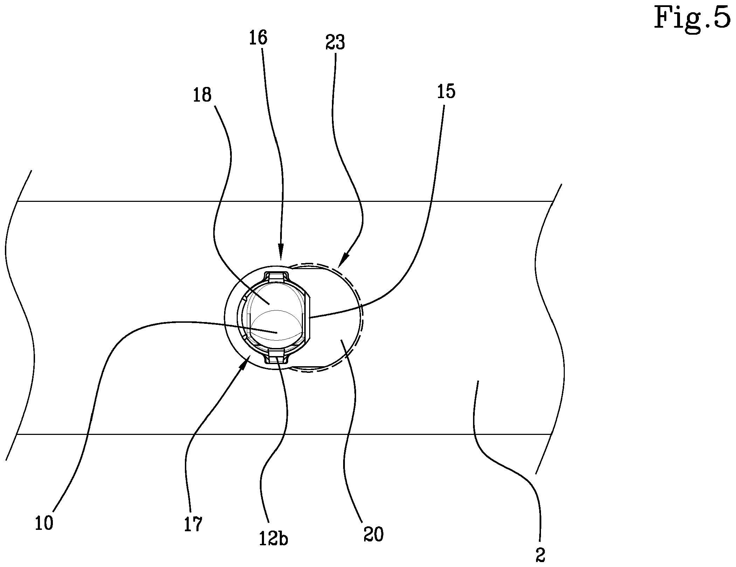

According to an aspect of the invention better visible in figures 3b and 5, the movable element 9 and the hollow body 5 have a shape coupling according to a section plane orthogonal to the longitudinal direction L, such as to obstruct the rotation of the movable element 9 about the longitudinal direction L and in order to enable, at the same time, the sliding of the movable element 9 along the same longitudinal direction L. More precisely, the lateral surface 14 of the movable element 9, having a substantially cylindrical shape, has a flat surface portion 15 preferably arranged laterally. Similarly, the inner cavity of the hollow element 5 is counter-shaped to the lateral wall 14 and therefore has a flat internal surface at said surface portion 15. In this way, the sliding of the movable element 9 is guaranteed between the first and the second operating positions, and at the same time, the rotation of the movable element 9 about the longitudinal direction L is obstructed during such movement. Advantageously, in this way the orientation of the movable element remains constant and correct to ensure that the triggering movement can always take place in an optimised and trouble-free manner during a demounting step of the article of furniture 4.

Even more advantageously, the shape coupling thus fashioned does not reduce the mobility of the movable element 9 inside the hollow body 5, maintaining a fluid sliding of the movable element 9 itself between the first and the second operating position. In addition, the shape coupling through vertically arranged flat surfaces enables the movable element 9 to tilt along a vertical plane parallel to these flat surfaces.

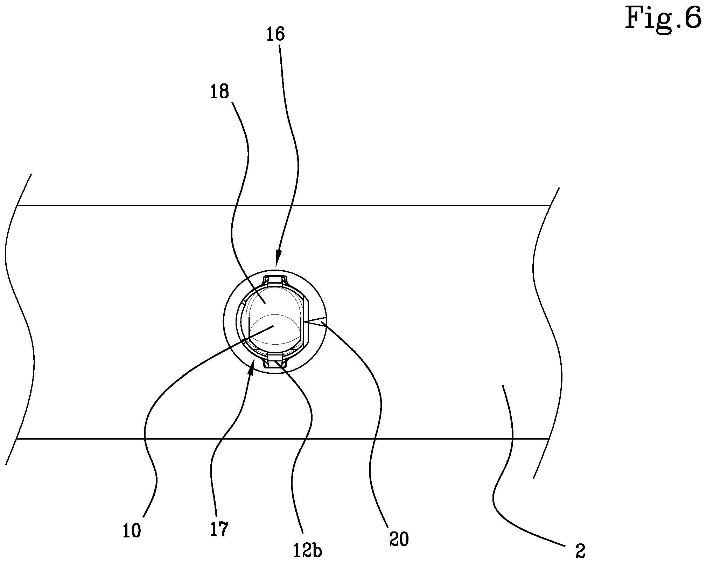

According to another aspect of the invention illustrated in figure 5 and figure 6, the device 1 comprises an orientation element 20 conformed to correctly orientate the hollow body 5 with respect to a surface of the thickness of the removable panel 2 of the article of furniture 4.

In this way, during a step of mounting the article of furniture 4, an operator is advantageously able to interpose the device 1 between the removable panel 2 and the wall 3 correctly so that the movable element 9 is also correctly orientated in order to turn the lower surface 17 of the terminal portion 10 downwards and the upper (and inclined) surface 18 of the terminal portion 10 upwards.

According to a further aspect of the invention, the orientation element 20 is arranged at the main opening 8 of the hollow body 5 and is conformed as a lateral protuberance (figure 5) or as a recess (figure 6) or as an identifying symbol of the positioning of the device (not shown). Alternatively, according to an embodiment not illustrated, the lateral wall 6 of the hollow body 5, or even only a small portion thereof adjacent to the main opening 8, has a flattened rather than rounded conformation so as to advantageously indicate to an operator the orientation with which the device 1 is to be inserted inside the first cavity 21 obtained along the thickness of the removable panel 2. This flattened conformation also prevents the device 1 from rotating inside the first cavity 21, thereby also maintaining the correct orientation of the movable element 9 inside the hollow body 5. By way of example, this flattened conformation can be obtained on the lower part of the hollow body 5 which is then inserted into the cavity of the removable panel 2 which has a similar flat area.

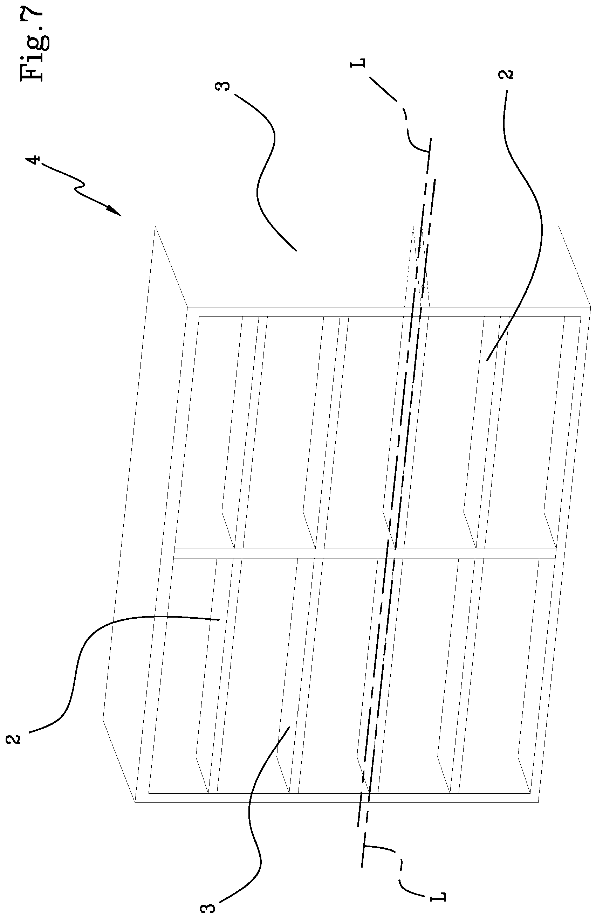

Figure 7 illustrates an article of furniture 4 comprising at least one removable panel 2, at least one wall 3 and at least one device 1 for supporting the same removable panel 2 with respect to the wall 3 according to a transversal positioning with one another.

In particular, the removable panel 2 has a first cavity 21 fashioned longitudinally to the extension of the removable panel 2. In other words, the cavity is fashioned along the thickness of the removable panel 2.

The wall 3 is arranged transversally to the removable panel 2 and has a second cavity 22 fashioned transversally to the surface extension of the same wall 3.

Advantageously, the first cavity 21 is configured to fully contain the hollow body 5 of the device 1 and the second cavity 22 is configured to receive the terminal portion 10 of the movable element 9 when the latter is in the first operating position (and the removable panel 2 is connected to the wall 3) so that the removable panel 2 is supported by the resting of the terminal portion inside the second cavity 22.

According to one aspect of the invention, the article of furniture 4 comprises a plurality of devices 1 interposed between the wall and the removable panel, each in respective first cavities 21 fashioned on the removable panel 2 and respective second cavities 22 fashioned on the wall 3. Preferably, the devices 1 are positioned on two opposite sides of the removable panel 2, so that the latter is supported between the two opposite walls 3 of the article of furniture 4.

If the orientation element 20 of the device 1 is conformed as a lateral protuberance, for example a semi-disk as illustrated in figure 5, a seat 23 adjacent to the first cavity 21 is fashioned on the thickness of the removable panel 2, so that once the hollow body 5 is inserted into the first cavity 21, the orientation element 20 is also insertable in the aforementioned seat 23. Advantageously, therefore, the device 1 is fully integrated in the removable panel 2.

Schematically, figure 1 and figure 2 illustrate a method for mounting and demounting a removable panel transversally to a wall of an article of furniture. In particular, the method comprises the operating steps of:
- fashioning at least one first cavity 21 on the removable panel 2 longitudinally to the surface extension of the removable panel 2 itself;
- fashioning at least one second cavity 22 on the wall 3 of the article of furniture 4 transversally to the surface extension of the wall 3 itself;
- connecting the previously described device 1 to the removable panel 2, so that the hollow body 5 of the device 1 is entirely inserted in the first cavity 21 of the removable panel 2 and the terminal portion 10 of the movable element 9 in the first operating position is projecting with respect to the removable panel 2;
- arranging the removable panel 2 transversally to the wall 3 of the article of furniture 4 so that the first cavity 21 and the second cavity 22 are aligned to one another and the terminal portion 10 of the movable element 9 is inserted in the second cavity 22 in order to support the removable panel 2.

In other words, following the insertion of the devices 1 inside the first cavities 21 of the removable panel 2, the step of mounting the article of furniture 4 simply involves interposing the same removable panel 2 between two opposite and parallel walls 3 of an article of furniture 4, as the respective movable elements 9 will be moved from the first to the second operating position automatically by the interaction with the aforementioned walls 3 (i.e. by the constraining reaction produced by the impact), and then return to the first operating position thanks to the thrust of the main elastic element 11. More specifically, the installation provides for initially aligning a first side of the removable panel 2 with the wall 3 so that the respective cavities 21,22 are aligned and the terminal portions 10 (with the respective movable element 9 in the first operating position) are consequently inserted into the second cavities 22 of the wall 3. Thereafter, the operator is able to tilt the removable panel 2 to a position generally parallel to the ground, wherein the terminal portions 10 of the devices 1 present on the second side opposite the first side of the removable panel 2 are inserted into the respective second cavities 22 so as to define the support of the removable panel 2. During part of the movement of the removable panel 2 in the aforementioned position parallel to the ground, the terminal portions 10 not inserted impact against the wall 3, moving the respective movable elements 9 inside the hollow body 5 without ruining the wall 3 of the article of furniture 4 thanks to a suitable dimensioning of the main elastic element 11 and the presence of at least one return elastic element 12.

According to one aspect of the invention, the method comprises the further operating step of applying a pressing force on the removable panel 2 along a direction transversal to the longitudinal direction L in order to cause a triggering movement of the movable element 9 of the device 1 towards the inside of the hollow body 5 so as to move the movable element 9 from the first operating position to the second operating position and at the same time configure at least one return elastic element 12 from the inactive condition to the active condition so as to incline and detach the removable panel 2 from the wall 3 of the article of furniture 4.

In other words, during the demounting step of the article of furniture 4, an operator imparts a slight thrust force on the removable panel 2, preferably in a position adjacent to the wall 3, from the bottom upwards so as to activate the triggering movement of the movable element 9.

According to a preferred embodiment of the invention, as a result of the tapered shape of the terminal portion 10 of the movable elements 9 (and thus the fact that the upper surface 18 is substantially an inclined plane) and the specific dimensional relation between an internal section of the hollow body 5 and the movable element 9, the thrust force applied by the operator is returned from the wall 3 as a constraining reaction on the upper surface 18 of the terminal portion substantially according to two different directions (as known by the "law of parallelogram of forces" in vectors perpendicular to each other).

The first component of the constraining reaction tends to incline the movable element 9 inside the hollow body 5 (above-mentioned tilting movement), while the second component, perpendicular to the first, pushes the movable element 9 towards the second operating position, overcoming the thrust generated by the main elastic element 11 with the help of the action of the return elastic elements 12. In this way, a first side of the removable panel 2 is disconnected from the wall 3 of the article of furniture 4 without causing damage to the second cavities 22 or to the wall 3 itself, and consequently the removable panel 2 itself is removed from the article of furniture 4.

## Claims

1. A device (1) for supporting a removable panel (2) with respect to a wall (3) of an article of furniture (4), wherein the removable panel (2) and the wall (3) are arranged transversally with respect to one another, the device comprising:
- a hollow body (5) having a lateral wall (6) extending along a longitudinal direction (L) between a bottom (7) and a main opening (8);
- a movable element (9) extending along said longitudinal direction (L) and slidably arranged inside said hollow body (5) at least between a first operating position, wherein a terminal portion (10) of said movable element (9) projects from said hollow body (5) through said main opening (8), and a second operating position, wherein said terminal portion (10) is at least partly inserted in said hollow body (5);
- a main elastic element (11) interposed between said bottom (7) and said movable element (9) and configured to exert an elastic force such as to move said movable element (9) towards said first operating position;
wherein it comprises at least one return elastic element (12) interposed between said lateral wall (6) of said hollow body (5) and said movable element (9) and configured to act on it in such a way to cause the movable element to return from the first operating position towards the second operating position; said return elastic element (12) being configurable between an inactive condition, corresponding to said first operating position, wherein it abuts but does not exert an elastic force on the movable element (9) directed towards said second operating position, and an active condition, corresponding to said second operating position, wherein it abuts and exerts an elastic force on the movable element (9), opposite to the elastic force exerted by said main elastic element (11) on the same movable element (9), in order to cause the movable element (9) to return from the first operating position to the second operating position following a triggering movement of the movable element (9) towards the inside of said hollow body (5).

2. The device (1) according to claim 1, wherein a dimensional relation between an internal section of said hollow body (5) and said movable element (9) in the first operating position is such as to enable the movable element (9) to tilt with respect to said longitudinal direction (L) inside said hollow body (5) following the application of an external force along a direction transversal to the longitudinal direction (L); the triggering movement being at least in part defined by a relative movement between the removable panel (2) and the wall (3).

3. The device (1) according to claim 2, wherein said movable element (9) is tilting in said hollow body (5) with respect to said longitudinal direction (L) according to a tilting movement parallel to the wall (3).

4. The device (1) according to claim 3, wherein said movable element (9) is configured to move towards the second operating position as a consequence of the combined action of the return elastic element (12) and the tilting movement of the movable element (9) inside the hollow body (5).

5. The device (1) according to any one of the preceding claims, wherein said return elastic element (12) is connected to said lateral wall (6) of said hollow body (5) and is configured to cooperate with a respective depression (13) fashioned on a lateral surface (14) of said movable element (9) in order to move the movable element (9) towards the second operating position following the triggering movement.

6. The device (1) according to any one of the preceding claims, comprising at least two return elastic elements (12) that are substantially opposite with respect to said longitudinal direction (L).

7. The device (1) according to claim 6, wherein said movable element (9) has two depressions (13) that are substantially opposite with respect to said longitudinal direction (L).

8. The device (1) according to claim 7, wherein said depressions (13) and said return elastic elements (12) are both mutually arranged staggered along said longitudinal direction (L) so that one with respect to another is arranged at a shorter distance from said terminal portion (10).

9. The device (1) according to any one of the preceding claims, wherein said at least one return elastic element (12) comprises a flexible appendage arranged in a cantilever fashion inside said hollow body (5) so as to interact with said movable element (9) during the movement from the first operating position to the second operating position and vice versa.

10. The device (1) according to claim 9, wherein said lateral wall (6) of said hollow body (5) comprises an opening window (16) for the movement of said flexible appendage between the active condition and the inactive condition.

11. The device (1) according to any one of the preceding claims, wherein said terminal portion (10) of said movable element (9) has a tapered longitudinal section.

12. The device (1) according to claim 11, wherein said terminal portion (10) has a lower surface (17) that extends parallel to said longitudinal direction (L) and an upper surface (18) that is at least partly inclined with respect to the longitudinal direction (L) so that said lower surface (17) defines a support surface when said movable element is in the first operating position and the triggering movement acts from said lower surface (17) towards said upper surface (18).

13. The device (1) according to claim 11 or 12, wherein said terminal portion (10) has two consecutive inclinations in which the angles are distinct and progressively greater with respect to said longitudinal direction (L) according to a direction which goes from said bottom (7) to said main opening (8).

14. An article of furniture (4) comprising:
- at least one removable panel (2) having a first cavity (21) fashioned longitudinally to the extension of said removable panel (2);
- at least one wall (3) arranged transversally with respect to said removable panel (2) and having a second cavity (22) fashioned transversally to the surface extension of said wall (3);
- at least one device (1) according to any one of claims 1 to 13, interposed between said wall (3) and said removable panel (2);
**characterised in that** said first cavity (21) is configured to entirely contain said hollow body (5) of said device (1) and said second cavity (22) is configured to receive said terminal portion (10) of said movable element (9) when said movable element (9) is in the first operating position so that said removable panel (2) is supported by the resting of said terminal portion (10) inside said second cavity (22).

15. An article of furniture according to claim 14 wherein the removable panel (2) is a shelf configured in such a way that the device (1) is concealed inside it being completely interposed between the shelf and a wall of an article of furniture in order to be completely invisible to an external observer.

16. A method for mounting and demounting a removable panel transversally to a wall (3) of an article of furniture (4), comprising the operating steps of:
- fashioning at least one first cavity (21) on the removable panel (2) longitudinally to the surface extension of the removable panel (2);
- fashioning at least one second cavity (22) on the wall (3) of the article of furniture (4) transversally to the surface extension of the wall (3);
- connecting, to said removable panel (2), a device (1) according to any one of claims 1 to 13, so that said hollow body (5) of said device (1) is entirely inserted in said first cavity (21) of said removable panel (2) and said terminal portion (10) of said movable element (9) in the first operating position is projecting with respect to said removable panel (2);
- arranging said removable panel (2) transversally to said wall (3) of the article of furniture (4) so that said first cavity (21) and said second cavity (22) are aligned to one another and said terminal portion (10) of said movable element (9) is inserted in said second cavity (22) in order to support said removable panel (2).

## Patentansprüche

1. Vorrichtung (1) zum Stützen einer abnehmbaren Platte (2) in Bezug auf eine Wand (3) eines Möbelstücks (4), wobei die abnehmbare Platte (2) und die Wand (3) quer zueinander angeordnet sind, wobei die Vorrichtung Folgendes umfasst:
- einen Hohlkörper (5), aufweisend eine Seitenwand (6), die sich entlang einer Längsrichtung (L) zwischen einem Boden (7) und einer Hauptöffnung (8) erstreckt;
- ein bewegbares Element (9), das sich entlang der Längsrichtung (L) erstreckt und verschiebbar im Hohlkörper (5) zumindest zwischen einer ersten Betriebsposition, in der ein Endabschnitt (10) des bewegbaren Elements (9) aus dem Hohlkörper (5) durch die Hauptöffnung (8) hervorsteht, und einer zweiten Betriebsposition, in der der Endabschnitt (10) zumindest teilweise in den Hohlkörper (5) eingefügt ist, angeordnet ist;
- ein elastisches Hauptelement (11), das zwischen dem Boden (7) und dem bewegbaren Element (9) eingesetzt und ausgelegt ist, um eine elastische Kraft auszuüben, sodass das bewegbare Element (9) hinführend zur ersten Betriebsposition bewegt wird,
wobei es mindestens ein elastisches Rückkehrelement (12) umfasst, das zwischen der Seitenwand (6) des Hohlkörpers (5) und dem bewegbaren Element (9) eingesetzt und ausgelegt ist, um auf dieses zu wirken, sodass das bewegbare Element veranlasst wird, von der ersten Betriebsposition hinführend in die zweite Betriebsposition zurückzukehren, wobei das elastische Rückkehrelement (12) zwischen einem inaktiven Zustand, entsprechend der ersten Betriebsposition, in der es am bewegbaren Element (9) anschlägt, jedoch keine elastische Kraft auf dieses ausübt, gerichtet hinführend zur zweiten Betriebsposition, und einem aktiven Zustand, entsprechend der zweiten Betriebsposition, ausgelegt sein kann, in dem es am bewegbaren Element (9) anschlägt und eine elastische Kraft auf dieses ausübt, die der elastischen Kraft entgegengesetzt ist, die vom elastischen Hauptelement (11) auf dasselbe bewegbare Element (9) ausgeübt wird, um dafür zu sorgen, dass das bewegbare Element (9) infolge einer Auslösebewegung des bewegbaren Elements (9) von der ersten Betriebsposition in die zweite Betriebsposition hinführend zur Innenseite des Hohlkörpers (5) zurückkehrt.

2. Vorrichtung (1) nach Anspruch 1, wobei eine Größenbeziehung zwischen einer Innenschnitt des Hohlkörpers (5) und dem bewegbaren Element (9) in der ersten Betriebsposition so beschaffen ist, dass es dem bewegbaren Element (9) ermöglicht wird, in Bezug auf die Längsrichtung (L) im Hohlkörper (5) infolge der Ausübung einer externen Kraft entlang einer quer zur Längsrichtung (L) verlaufenden Richtung zu kippen, wobei die Auslösebewegung mindestens teilweise von einer relativen Bewegung zwischen der abnehmbaren Platte (2) und der Wand (3) definiert ist.

3. Vorrichtung (1) nach Anspruch 2, wobei das bewegbare Element (9) im Hohlkörper (5) in Bezug auf die Längsrichtung (L) nach einer Kippbewegung kippt, die parallel zur Wand (3) verläuft.

4. Vorrichtung (1) nach Anspruch 3, wobei das bewegbare Element (9) ausgelegt ist, um sich hinführend zur zweiten Betriebsposition als Folge der kombinierten Wirkung des elastischen Rückkehrelements (12) und der Kippbewegung des bewegbaren Elements (9) im Hohlkörper (5) zu bewegen.

5. Vorrichtung (1) nach einem der vorhergehenden Ansprüche, wobei das elastische Rückkehrelement (12) mit der Seitenwand (6) des Hohlkörpers (5) verbunden und ausgelegt ist, um mit einer jeweiligen Vertiefung (13) zu kooperieren, die auf einer seitlichen Oberfläche (14) des bewegbaren Elements (9) ausgestaltet ist, um das bewegbare Element (9) hinführend zur zweiten Betriebsposition infolge der Auslösebewegung zu bewegen.

6. Vorrichtung (1) nach einem der vorhergehenden Ansprüche, umfassend mindestens zwei elastische Rückkehrelement (12), die im Wesentlichen in Bezug auf die Längsrichtung (L) entgegengesetzt sind.

7. Vorrichtung (1) nach Anspruch 6, wobei das bewegbare Element (9) zwei Vertiefungen (13) aufweist, die im Wesentlichen in Bezug auf die Längsrichtung (L) entgegengesetzt sind.

8. Vorrichtung (1) nach Anspruch 7, wobei die Vertiefungen (13) und die elastischen Rückkehrelemente (12) beide gegenseitig versetzt entlang der Längsrichtung (L) angeordnet sind, sodass die einen in Bezug auf die anderen in einem kürzeren Abstand vom Endabschnitt (10) angeordnet sind.

9. Vorrichtung (1) nach einem der vorhergehenden Ansprüche, wobei mindestens ein elastisches Rückkehrelement (12) einen flexiblen Fortsatz umfasst, der auskragend im Hohlkörper (5) angeordnet ist, sodass er mit dem bewegbaren Element (9) während der Bewegung von der ersten Betriebsposition in die zweite Betriebsposition und umgekehrt interagiert.

10. Vorrichtung (1) nach Anspruch 9, wobei die Seitenwand (6) des Hohlkörpers (5) ein Öffnungsfenster (16) für die Bewegung des flexiblen Fortsatzes zwischen dem aktiven Zustand und dem inaktiven Zustand umfasst.

11. Vorrichtung (1) nach einem der vorhergehenden Ansprüche, wobei der Endabschnitt (10) des bewegbaren Elements (9) einen verjüngten Längsschnitt aufweist.

12. Vorrichtung (1) nach Anspruch 11, wobei der Endabschnitt (10) eine untere Oberfläche (17) aufweist, die sich parallel zur Längsrichtung (L) erstreckt, und eine obere Oberfläche (18), die zumindest teilweise in Bezug auf die Längsrichtung (L) geneigt ist, sodass die untere Oberfläche (17) eine Stützoberfläche definiert, wenn sich das bewegbare Element in der ersten Betriebsposition befindet und die Auslösebewegung von der unteren Oberfläche (17) hinführend zur oberen Oberfläche (18) wirkt.

13. Vorrichtung (1) nach Anspruch 11 oder 12, wobei der Endabschnitt (10) zwei aufeinanderfolgende Neigungen aufweist, in denen die Winkel unterschieden und progressiv größer in Bezug auf die Längsrichtung (L) nach einer Richtung, die vom Boden (7) zur Hauptöffnung (8) geht, sind.

14. Möbelstück (4), umfassend:
- mindestens eine abnehmbare Platte (2), aufweisend einen ersten Hohlraum (21), der längs zur Ausdehnung der abnehmbaren Platte (2) ausgestaltet ist;
- mindestens eine Wand (3), die in Bezug auf die abnehmbare Platte (2) quer angeordnet ist und einen zweiten Hohlraum (22) aufweist, der quer zur Ausdehnungsoberfläche der Wand (3) ausgestaltet ist;
- mindestens eine Vorrichtung (1) nach einem der Ansprüche 1 bis 13, die zwischen der Wand (3) und der bewegbaren Platte (2) eingesetzt ist,
**dadurch gekennzeichnet, dass** der erste Hohlraum (21) ausgelegt ist, um den Hohlkörper (5) der Vorrichtung (1) vollumfänglich zu enthalten, und der zweite Hohlraum (22) ausgelegt ist, um den Endabschnitt (10) des bewegbaren Elements (9) aufzunehmen, wenn sich das bewegbare Element (9) in der ersten Betriebsposition befindet, sodass die abnehmbare Platte (2) durch das Ruhen des Endabschnitts (10) im zweiten Hohlraum (22) gestützt wird.

15. Möbelstück nach Anspruch 14, wobei die abnehmbare Platte (2) ein Regalbrett ist, das so ausgelegt ist, dass die Vorrichtung (1) darin verdeckt liegend angeordnet ist, da sie vollständig zwischen dem Regalbrett und einer Wand eines Möbelstücks eingesetzt ist, um für einen externen Betrachter völlig unsichtbar zu sein.

16. Verfahren zur Montage und Demontage einer abnehmbaren Platte quer zu einer Wand (3) eines Möbelstücks (4), umfassend die folgenden Schritte:
- Ausgestalten von mindestens einem ersten Hohlraum (21) auf der abnehmbaren Platte (2) längs zur Oberflächenausdehnung der abnehmbaren Platte (2);
- Ausgestalten von mindestens einem zweiten Hohlraum (22) auf der Wand (3) des Möbelstücks (4) quer zur Oberflächenausdehnung der Wand (3);
- Verbinden einer Vorrichtung (1) nach einem der Ansprüche 1 bis 13 mit der abnehmbaren Platte (2), sodass der Hohlkörper (5) der Vorrichtung (1) vollständig in den ersten Hohlraum (21) der abnehmbaren Platte (2) eingefügt ist und der Endabschnitt (10) des bewegbaren Elements (9) in der ersten Betriebsposition in Bezug auf die abnehmbare Platte (2) hervorsteht;
- Anordnen der abnehmbaren Platte (2) quer zur Wand (3) des Möbelstücks (4), sodass der erste Hohlraum (21) und der zweite Hohlraum (22) fluchtend zueinander angeordnet sind und der Endabschnitt (10) des bewegbaren Elements (9) in den zweiten Hohlraum (22) eingefügt ist, um die abnehmbare Platte (2) zu stützen.

## Revendications

1. Dispositif (1) de support d'un panneau amovible (2) par rapport à une paroi (3) d'un élément de mobilier (4), dans lequel le panneau amovible (2) et la paroi (3) sont disposés transversalement l'un par rapport à l'autre, le dispositif comprenant :
- un corps creux (5) ayant une paroi latérale (6) se prolongeant le long d'une direction longitudinale (L) entre un fond (7) et une ouverture principale (8) ;
- un élément mobile (9) se prolongeant le long de ladite direction longitudinale (L) et disposé de manière coulissante à l'intérieur dudit corps creux (5) au moins entre une première position de fonctionnement, dans laquelle une partie terminale (10) dudit élément mobile (9) dépasse dudit corps creux (5) à travers ladite ouverture principale (8), et une deuxième position de fonctionnement, dans laquelle ladite partie terminale (10) est au moins partiellement introduite dans ledit corps creux (5) ;
- un élément élastique principal (11) interposé entre ledit fond (7) et ledit élément mobile (9) et configuré pour exercer une force élastique de manière à déplacer ledit élément mobile (9) vers ladite première position de fonctionnement ;
dans lequel il comprend au moins un élément de rappel élastique (12) interposé entre ladite paroi latérale (6) dudit corps creux (5) et ledit élément mobile (9) et configuré pour agir sur celui-ci de manière à amener l'élément mobile à revenir de la première position de fonctionnement vers la deuxième position de fonctionnement ; ledit élément de rappel élastique (12) pouvant être configuré entre une condition inactive, correspondant à ladite première position de fonctionnement, dans laquelle il se met en butée mais n'exerce pas de force élastique sur l'élément mobile (9) dirigé vers ladite deuxième position de fonctionnement, et une condition active, correspondant à ladite deuxième position de fonctionnement, dans lequel il se met en butée et exerce une force élastique sur l'élément mobile (9), opposée à la force élastique exercée par ledit élément élastique principal (11) sur le même élément mobile (9), afin d'amener l'élément mobile (9) à revenir de la première position de fonctionnement à la deuxième position de fonctionnement suite au mouvement de déclenchement de l'élément mobile (9) vers l'intérieur dudit corps creux (5).

2. Dispositif (1) selon la revendication 1, dans lequel une relation dimensionnelle entre une section intérieure dudit corps creux (5) et ledit élément mobile (9) dans la première position de fonctionnement est telle qu'elle permet à l'élément mobile (9) de basculer par rapport à ladite direction longitudinale (L) à l'intérieur dudit corps creux (5) suite à l'application d'une force extérieur le long d'une direction transversale à la direction longitudinale (L) ; le mouvement de déclenchement étant au moins en partie défini par un mouvement relatif entre le panneau amovible (2) et la paroi (3).

3. Dispositif (1) selon la revendication 2, dans lequel ledit élément mobile (9) bascule dans ledit corps creux (5) par rapport à ladite direction longitudinale (L) selon un mouvement de basculement parallèle à la paroi (3) .

4. Dispositif (1) selon la revendication 3, dans lequel ledit élément mobile (9) est configuré pour se déplacer vers la deuxième position de fonctionnement sous l'effet de l'action combinée de l'élément de rappel élastique (12) et du mouvement de basculement de l'élément mobile (9) à l'intérieur du corps creux (5).

5. Dispositif (1) selon l'une quelconque des revendications précédentes, dans lequel ledit élément de rappel élastique (12) est relié à ladite paroi latérale (6) dudit corps creux (5) et est configuré pour coopérer avec une dépression respective (13) façonnée sur une surface latérale (14) dudit élément mobile (9) afin de déplacer l'élément mobile (9) vers la deuxième position de fonctionnement suite au mouvement de déclenchement.

6. Dispositif (1) selon l'une quelconque des revendications précédentes, comprenant au moins deux éléments de rappel élastiques (12) essentiellement opposés par rapport à ladite direction longitudinale (L) .

7. Dispositif (1) selon la revendication 6, dans lequel ledit élément mobile (9) a deux dépressions (13) essentiellement opposées par rapport à ladite direction longitudinale (L).

8. Dispositif (1) selon la revendication 7, dans lequel lesdites dépressions (13) et lesdits éléments de rappel élastiques (12) sont tous deux disposés mutuellement en décalé le long de ladite direction longitudinale (L) de sorte que l'un par rapport à l'autre soit disposé à une distance plus courte de ladite partie terminale (10).

9. Dispositif (1) selon l'une quelconque des revendications précédentes, dans lequel ledit au moins un élément de rappel élastique (12) comprend un appendice flexible disposé en porte-à-faux à l'intérieur dudit corps creux (5) de manière à interagir avec ledit élément mobile (9) lors du déplacement de la première position de fonctionnement vers la deuxième position de fonctionnement et vice versa.

10. Dispositif (1) selon la revendication 9, dans lequel ladite paroi latérale (6) dudit corps creux (5) comprend une fenêtre d'ouverture (16) pour le mouvement dudit appendice flexible entre la condition active et la condition inactive.

11. Dispositif (1) selon l'une quelconque des revendications précédentes, dans lequel ladite partie terminale (10) dudit élément mobile (9) a une section longitudinale conique.

12. Dispositif (1) selon la revendication 11, dans lequel ladite partie terminale (10) a une surface inférieure (17) qui se prolonge parallèlement à ladite direction longitudinale (L) et une surface supérieure (18) qui est au moins partiellement inclinée par rapport à la direction longitudinale (L) de sorte que ladite surface inférieure (17) définit une surface de support lorsque ledit élément mobile se trouve dans la première position de fonctionnement et que le mouvement de déclenchement agit à partir de ladite surface inférieure (17) vers ladite surface supérieure (18).

13. Dispositif (1) selon la revendication 11 ou 12, dans lequel ladite partie terminale (10) a deux inclinaisons consécutives dans lesquelles les angles sont distincts et progressivement plus grands par rapport à ladite direction longitudinale (L) selon une direction qui va dudit fond (7) vers ladite ouverture principale (8).

14. Élément de mobilier (4), comprenant :
- au moins un panneau amovible (2) ayant une première cavité (21) façonnée longitudinalement par rapport à l'extension dudit panneau amovible (2) ;
- au moins une paroi (3) disposée transversalement par rapport audit panneau amovible (2) et ayant une deuxième cavité (22) façonnée transversalement par rapport à l'extension de la surface de ladite paroi (3) ;
- au moins un dispositif (1) selon l'une quelconque des revendications 1 à 13, interposé entre ladite paroi (3) et ledit panneau amovible (2) ;
**caractérisé en ce que** ladite première cavité (21) est configurée pour contenir entièrement ledit corps creux (5) dudit dispositif (1) et ladite deuxième cavité (22) est configurée pour recevoir ladite partie terminale (10) dudit élément mobile (9) lorsque ledit élément mobile (9) se trouve dans la première position de fonctionnement de sorte que ledit panneau amovible (2) est supporté par l'appui de ladite partie terminale (10) à l'intérieur de ladite deuxième cavité (22).

15. Élément de mobilier selon la revendication 14, dans lequel le panneau amovible (2) est une étagère configurée de telle sorte que le dispositif (1) est dissimulé à l'intérieur de celle-ci en étant complètement interposé entre l'étagère et une paroi d'un élément mobilier afin d'être complètement invisible pour un observateur extérieur.

16. Procédé de montage et de démontage d'un panneau amovible transversalement à une paroi (3) d'un élément de mobilier (4), comprenant les étapes fonctionnelles suivantes :
- façonner au moins une première cavité (21) sur le panneau amovible (2) longitudinalement à l'extension de la surface du panneau amovible (2) ;
- façonner au moins une deuxième cavité (22) sur la paroi (3) de l'élément de mobilier (4) transversalement à l'extension de la surface de la paroi (3) ;
- relier, audit panneau amovible (2), un dispositif (1) selon l'une quelconque des revendications 1 à 13, de sorte que ledit corps creux (5) dudit dispositif (1) est entièrement introduit dans ladite première cavité (21) dudit panneau amovible (2) et ladite partie terminale (10) dudit élément mobile (9) dans la première position de fonctionnement dépasse par rapport audit panneau amovible (2) ;
- disposer ledit panneau amovible (2) transversalement à ladite paroi (3) de l'élément de mobilier (4) de sorte que ladite première cavité (21) et ladite deuxième cavité (22) sont alignées l'une par rapport à l'autre et ladite partie terminale (10) dudit élément mobile (9) est introduite dans ladite deuxième cavité (22) afin de supporter ledit panneau amovible (2).
